# DEMANDE DE BREVET EUROPEEN

(11) **EP 4 198 947 A1**
(43) Date de publication de la demande: **21.06.2023**
(21) Numéro de dépôt: 22214586.4
(22) Date de dépôt: 19.12.2022
(51) Int. Cl.: G08G 5/02, G08G 5/00, B64D 45/04, G01C 23/00, B64D 43/00, B64D 45/08

(54) **PROCÉDÉ D'IDENTIFICATION D'UNE ZONE DE POSER, PROGRAMME D ORDINATEUR ET DISPOSITIF ÉLECTRONIQUE ASSOCIÉS**

(30) Priorité: 20.12.2021 FR 2113975
(71) Demandeur: THALES, 92400 Courbevoie (FR)
(72) Inventeur: LEMOINE, Olivier, 33700 MERIGNAC (FR); LEPRON, Nicolas, 33700 MERIGNAC (FR); GROSSETETE, Matthieu, 33700 MERIGNAC (FR)
(74) Mandataire: Lavoix

(57) **Abrégé**

L'invention concerne un procédé d'identification d'une zone de poser (18) et d'affichage sur un système d'affichage tête haute embarqué dans un aéronef (10) d'un symbole conforme à la zone de poser (18), l'aéronef (10) étant propre à survoler un terrain (12) et à atterrir sur ladite zone de poser (18) du terrain (12).

L'aéronef (10) est un hélicoptère, un drone ou un avion électrique à décollage et atterrissage verticaux.

Le procédé d'affichage comprend au moins les étapes suivantes :
- une phase de vol stationnaire de l'aéronef (10) au-dessus de la zone de poser (18) et acquisition de la position géographique de la zone de poser (18) ;
- un vol de l'aéronef (10) en direction de la zone de poser et affichage sur le système d'affichage tête haute d'un symbole conforme de la zone de poser (18) à la position géographique relevée.

## Description

La présente invention concerne un procédé d'identification d'une zone de poser.

L'invention concerne également un programme d'ordinateur comportant des instructions logicielles qui, lorsqu'elles sont exécutées par un ordinateur, mettent en oeuvre un tel procédé.

L'invention concerne également un dispositif électronique d'identification d'une zone de poser.

L'invention concerne plus particulièrement un hélicoptère, tout en étant applicable à un drone ou à un avion électrique à décollage et atterrissage verticaux.

L'invention concerne en particulier l'aide à l'atterrissage de l'hélicoptère sur une zone de poser. Cette aide est particulièrement utile au pilote lorsque la zone de poser se situe sur un terrain quelconque, hors d'un aérodrome par exemple, et lorsque les conditions de visualisation de la zone de poser sont dégradées.

C'est en particulier le cas d'atterrissages d'hélicoptères sur des zones présentant du sable, de la poussière, ou bien de la neige.

En effet, lorsqu'un hélicoptère décolle d'une zone de poser ou décolle d'une zone de poser non préparée, si des particules sont présentes en nombre sur le sol, elles sont soulevées par le flux d'air créé par le rotor principal de l'hélicoptère, provoquant un nuage qui obstrue la vision du pilote et peut aller jusqu'à lui faire perdre la visibilité de son environnement. Deux phénomènes en particulier sont bien connus et fortement accidentogènes : le phénomène dit de « Brown-out », qui se produit en présence de sable ou de poussière, et le phénomène dit de « White-out », qui se produit en présence de neige légère.

Egalement, lors de l'atterrissage d'un hélicoptère par conditions de visibilité réduites du fait de l'intensité lumineuse, par exemple de nuit, ou face à un soleil bas sur l'horizon, le pilote peut perdre les références visuelles essentielles à la sécurité de l'opération.

Ces conditions aboutissant à la perte de références visuelles ne peuvent pas toujours être évitées. On peut notamment citer les opérations dans des zones désertiques où le sable est présent sur la plupart des points de poser des hélicoptères, les opérations dans des zones où la neige est présente, par exemple lors du secours en montagne ou encore les opérations de secours médical d'urgence nécessitant de faire un stationnaire dans l'effet de sol ou d'aller se poser sur des terrains non préparés, parfois de nuit, parfois sur des surfaces poussiéreuses.

Il existe donc un besoin d'assister le pilote pour toute opération proche du terrain et des obstacles (décollage, atterrissage, stationnaire dans l'effet de sol), afin de lui permettre de piloter l'hélicoptère en sécurité par rapport à son environnement extérieur proche, et donc d'éviter la désorientation spatiale inhérente à la perte des références visuelles extérieures et fortement dangereuse dans ces phases de vol.

Afin d'assister le pilote, il peut être envisagé d'équiper l'hélicoptère de divers capteurs permettant d'offrir au pilote une meilleure perception de son environnement, tels que des radars millimétriques, des LIDAR ou des capteurs infra-rouge. Afin de pouvoir traiter tous les types de conditions de visibilité réduite lors de ces opérations de décollage/atterrissage, et en particulier les différentes tailles de particules en suspension (sable, poussière, neige), mais aussi les différents types d'approche/décollage, avec la prise en compte du vent, une solution à base de tels capteurs nécessite de combiner les technologies (radar millimétrique, lidar, infra-rouge...), qui ont des performances différentes selon le type d'obscurant, et développer de nouveaux produits à large champ pour couvrir les besoins des hélicoptères, ce qui rend une telle approche complexe et coûteuse.

On connait également des dispositifs permettant d'afficher sur un système d'affichage une symbologie représentant la zone de poser. Toutefois, une telle solution nécessite la connaissance, avant d'arriver sur zone, des coordonnées géographiques précises de la zone de poser, en particulier selon l'axe vertical, ce qui n'est souvent pas le cas.

Le but de l'invention est ainsi de proposer un procédé d'aide au pilotage en conditions de visibilité réduite permettant un atterrissage sur un terrain non préparé et non connu, tout en étant simple et peu onéreux à mettre en oeuvre.

A cet effet, l'invention a pour objet un procédé d'identification d'une zone de poser et d'affichage sur un système d'affichage tête haute embarqué dans un aéronef d'un symbole conforme à ladite zone de poser, l'aéronef étant propre à survoler un terrain et à atterrir sur ladite zone de poser du terrain, l'aéronef étant un hélicoptère, un drone ou un avion électrique à décollage et atterrissage verticaux,
le procédé comprenant au moins les étapes suivantes :
- une phase de vol stationnaire de l'aéronef au-dessus de la zone de poser et acquisition de la position géographique de la zone de poser ;
- un vol de l'aéronef en direction de la zone de poser et affichage sur le système d'affichage tête haute d'un symbole conforme de la zone de poser à la position géographique relevée.

Suivant d'autres aspects avantageux de l'invention, le procédé comprend une ou plusieurs des caractéristiques suivantes, prises isolément ou suivant toutes les combinaisons techniquement possibles :
- la phase vol stationnaire est effectuée à une hauteur du terrain supérieure à 15 m ;
- l'acquisition de la position géographique de la zone de poser est effectuée par l'actionnement d'une commande lors du vol stationnaire par un opérateur de l'aéronef ;
- l'étape d'acquisition comprend les sous-étapes de :
   - acquisition de la latitude et de la longitude de la zone de poser au moyen d'un système de positionnement par satellites embarqué dans l'aéronef;
   - acquisition de la hauteur relative de l'aéronef au-dessus de la zone de poser au moyen d'un radio-altimètre embarqué dans l'aéronef;
   - acquisition de l'altitude de l'aéronef au moyen d'un baro-altimètre embarqué dans l'aéronef;
   - détermination de l'altitude de la zone de poser par soustraction de ladite hauteur relative à l'altitude de l'aéronef ;
- le symbole affiché est :
   - un point de repère lorsque l'aéronef est à une distance de la zone de poser supérieure à une distance seuil, la distance entre l'aéronef et la zone de poser étant avantageusement affichée dans le voisinage du point de repère;
   - une représentation en deux dimensions superposée à la zone de poser lorsque l'aéronef est à une distance de la zone de poser inférieure à la distance seuil ; et
- le procédé d'identification comprend une outre une étape de recalage de la conformité du symbole par rapport à la zone de poser sur le système d'affichage par un opérateur de l'aéronef.

L'invention a également pour objet un programme d'ordinateur comportant des instructions logicielles qui, lorsqu'elles sont exécutées par un ordinateur, mettent en oeuvre un procédé tel que défini ci-dessus.

L'invention a également pour objet un dispositif électronique d'identification d'une zone de poser et d'affichage sur un système d'affichage tête haute embarqué dans un aéronef d'un symbole conforme à ladite zone de poser, l'aéronef étant propre à survoler un terrain et à atterrir sur ladite zone de poser du terrain, l'aéronef étant un hélicoptère, un drone ou un avion électrique à décollage et atterrissage verticaux, le dispositif électronique d'affichage comprenant :
- un module d'acquisition configuré pour acquérir la position géographique de la zone de poser lors d'une phase de vol stationnaire de l'aéronef au-dessus de la zone de poser ; et
- un module d'affichage configuré pour afficher sur le système d'affichage tête haute un symbole conforme de la zone de poser à la position géographique relevée, lors d'un vol de l'aéronef en direction de la zone de poser

Ces caractéristiques et avantages de l'invention apparaîtront plus clairement à la lecture de la description qui va suivre, donnée uniquement à titre d'exemple non limitatif, et faite en référence aux dessins annexés, sur lesquels :
**[****Fig 1****]** la figure 1 est une vue, schématique et de côté, d'un cockpit d'un aéronef ;
**[****Fig 2****]** la figure 2 est une vue en perspective d'un vol stationnaire de l'aéronef de la figure 1 au-dessus d'une zone de poser ;
**[****Fig 3****]** la figure 3 est une vue en perspective d'un vol de l'aéronef de la figure 1 en direction de la zone de poser ;
**[****Fig 4****]** la figure 4 est une représentation d'une vue affichée sur un système d'affichage disposé dans l'aéronef de la figure 1 ;
**[****Fig 5****]** la figure 5 est une autre représentation d'une vue affichée sur un système d'affichage disposé dans l'aéronef de la figure 1 ; et
**[****Fig 6****]** la figure 6 un organigramme d'un procédé d'identification selon l'invention.

Dans ce qui suit, le terme « vertical » s'entend de manière générale comme étant orienté selon la direction de la force de gravité. Le terme « horizontal » s'entend de manière générale comme perpendiculaire à la direction verticale, qui est selon la force de gravité.

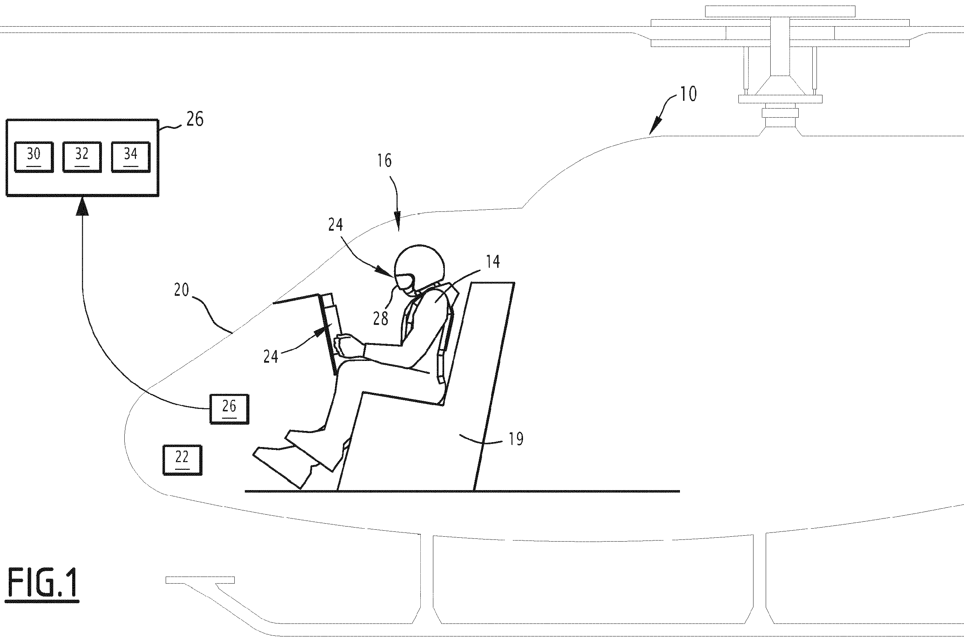

Un aéronef 10 est représenté sur les figures 1 à 3.

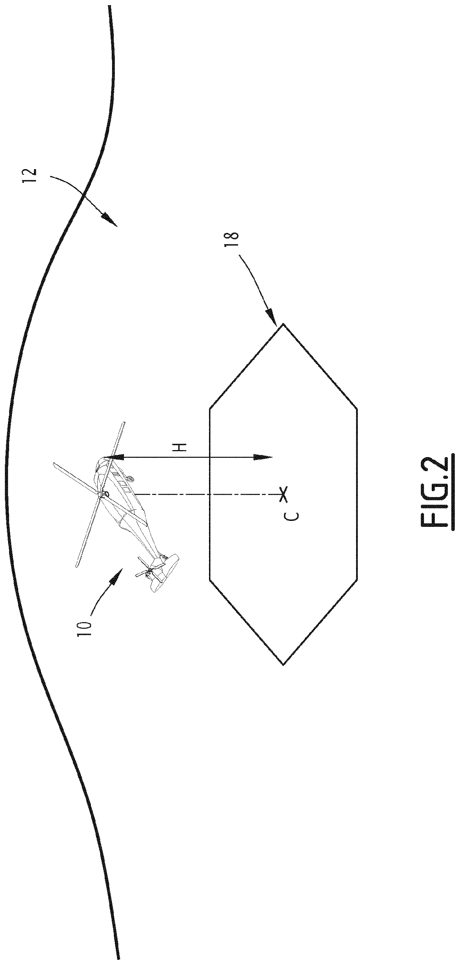

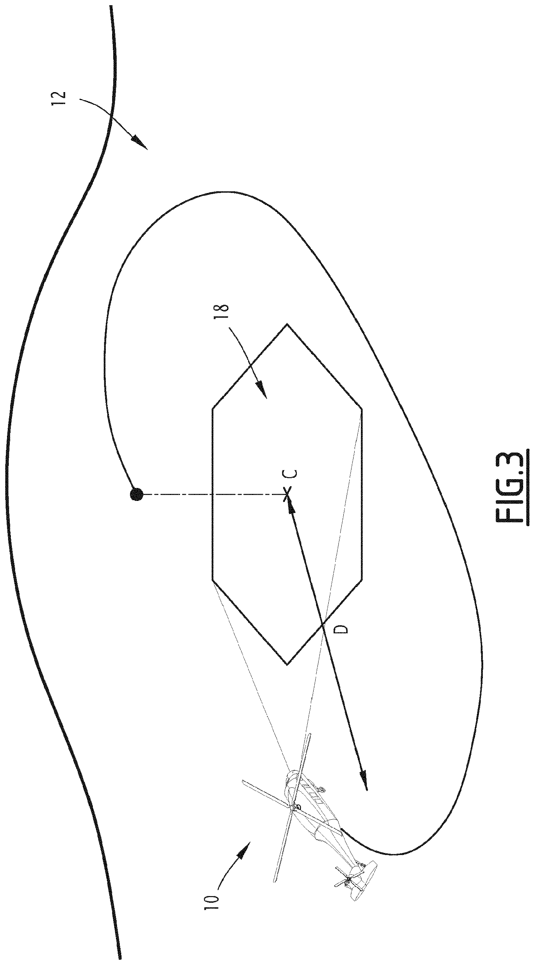

Comme visible en particulier sur les figures 2 et 3, l'aéronef 10 est propre à survoler un terrain 12. Ce terrain 12 est par exemple un désert, un terrain poussiéreux ou enneigé.

L'aéronef 10 est ici un hélicoptère.

En variante, l'aéronef 10 est un drone.

En variante encore, l'aéronef 10 est un avion électrique à décollage et atterrissage verticaux, aussi appelé eVTOL.

Autrement dit, l'aéronef 10 est un engin volant propre à réaliser un vol stationnaire.

L'aéronef 10 est pilotable par un pilote 14 via un poste de commande 16, le poste de commande 16 étant disposé à l'intérieur de l'aéronef 10 ou bien à distance de l'aéronef 10, notamment dans le cas d'un drone.

L'aéronef 10 est propre à atterrir sur une zone de poser 18 du terrain 12.

La zone de poser 18 est notamment une partie quelconque du terrain 12, ou un aérodrome enneigé par exemple.

Il est ainsi entendu que la zone de poser 18 se présente sous la forme d'une surface ou d'un point géographique.

La zone de poser 18 est définie par des coordonnées géographiques, telles qu'une latitude, une longitude et une altitude dans un système géodésique.

Le poste de commande 16 est ici un cockpit de l'aéronef 10. Comme visible sur la figure 1, le poste de commande 16 comporte au moins un siège 19 pour le pilote 14, un pare-brise 20 au moins partiellement transparent et séparant l'intérieur du cockpit de l'environnement extérieur de l'aéronef 10, une pluralité de capteurs de positionnement 22, et au moins un ensemble d'affichage.

Les capteurs de positionnement 22 sont configurés pour déterminer la position géographique de l'aéronef 10, notamment définie par des coordonnées géographiques, telles qu'une latitude, une longitude et une altitude dans un système géodésique.

Les capteurs de positionnement 22 comprennent notamment un radio-altimètre, un baro-altimètre et un système de positionnement satellite.

Le radio-altimètre est configuré pour mesurer la hauteur relative de l'aéronef 10 par rapport au terrain 12 et notamment au-dessus de la zone de poser 18 lorsque l'aéronef 10 est situé à la verticale de la zone de poser 18. Le radio-altimètre comprend notamment une antenne émettrice d'une onde vers le terrain 12, où elle est réfléchie de manière diffuse. Une partie de l'énergie est donc réémise vers l'aéronef 10 et captée par une antenne réceptrice. La hauteur est alors déterminée en fonction du temps pris par l'onde pour faire l'aller-retour.

Le baro-altimètre est configuré pour l'altitude de l'aéronef 10. On entend par « altitude », l'élévation d'un point par rapport au niveau moyen de la mer. Le baro-altimètre est configuré pour mesurer une différence de pression atmosphérique entre le niveau de référence, en particulier le niveau de la mer, et le niveau de l'altimètre.

Le système de positionnement par satellites (aussi désigné conventionnellement sous le sigle GNSS pour « Géolocalisation et Navigation par un Système de Satellites ») est configuré pour mesurer la latitude et la longitude de l'aéronef 10.

L'ensemble d'affichage comprend un système d'affichage 24 et un dispositif électronique 26 d'identification d'une zone de poser.

Le système d'affichage 24 comprend un écran d'affichage tête haute. L'écran d'affichage 24 tête haute est au moins partiellement transparent. Avantageusement, l'écran d'affichage 24 tête haute est une visière 28 intégrée dans un casque propre à être porté par le pilote 14, comme visible sur la figure 1. En variante, l'écran d'affichage 24 tête haute est une surface transparente fixée dans le cockpit et placée devant le pilote 14.

Selon un autre mode de réalisation, non représenté, l'aéronef 10 est un drone pilotable à distance via un poste de commande 16, par exemple terrestre, à partir duquel le pilotage du drone est effectué. Le poste de commande 16 comporte ici au moins le siège 19 du pilote 12 et l'écran d'affichage 24 et au moins un écran d'affichage d'environnement, non représenté. L'écran d'affichage d'environnement est configuré pour afficher l'environnement extérieur de l'aéronef 10 filmé à partir d'au moins une caméra embarquée par le drone et/ou afficher un rendu topographique synthétique.

Comme visible sur la figure 1, le dispositif électronique d'identification 26 comprend un module d'acquisition 30 et un module d'affichage 32.

Le dispositif électronique 26 comprend en outre avantageusement un module de recalage 34, permettant de corriger un éventuel décalage perçu par le pilote lorsqu'il superpose la symbologie affichée dans son écran d'affichage tête haute à la zone de poser vue au travers de son écran tête haute, alors que les conditions de visibilité sont encore bonnes. ; ce décalage peut être dû au cumul des erreurs résiduelles venant des senseurs de positionnement et des erreurs dans la chaîne d'affichage.

Comme cela sera expliqué plus en détail par la suite, le module d'acquisition 30 est configuré pour acquérir la position géographique de la zone de poser 18 lors d'un vol stationnaire de l'aéronef 10 au-dessus de la zone de poser 18.

En particulier, le module d'acquisition 30 est configuré pour acquérir la latitude et la longitude de la zone de poser 18 au moyen du système de positionnement par satellites.

On entend par « la latitude et la longitude de la zone de poser 18 », la latitude et la longitude du centre de la zone de poser 18, représenté par le point C sur les figures 2 et 3.

Le système de positionnement par satellites est notamment configuré pour mesurer la latitude et la longitude de l'aéronef 10 et le module d'acquisition 30 est configuré pour en déduire la latitude et la longitude de la zone de poser 18. En effet, lorsque l'aéronef 10 est en vol stationnaire au-dessus de la zone de poser 18, la latitude et la longitude du centre C de la zone de poser 18 sont égales à la latitude et la longitude de l'aéronef 10.

En référence à la figure 3, le module d'acquisition 30 est en outre configuré pour acquérir la hauteur H relative de l'aéronef 10 au-dessus de la zone de poser 18 au moyen de la radio-altimètre.

Le module d'acquisition 30 est en outre configuré pour acquérir l'altitude de l'aéronef 10 au moyen du baro-altimètre.

Le module d'acquisition 30 est en outre configuré pour déterminer l'altitude de la zone de poser 18 par soustraction de la hauteur H relative de l'aéronef 10 au-dessus de la zone de poser 18 à l'altitude de l'aéronef 10.

Le module d'affichage 32 est configuré pour afficher, lors d'un vol de l'aéronef 10 en direction de la zone de poser 18 comme représenté sur la figure 3, sur le système d'affichage 24 tête haute un symbole conforme de la zone de poser 18 à la position géographique relevé.

Par symbole conforme, on entend une représentation cartographique et symbolique qui se superpose exactement au terrain effectivement vu par le pilote.

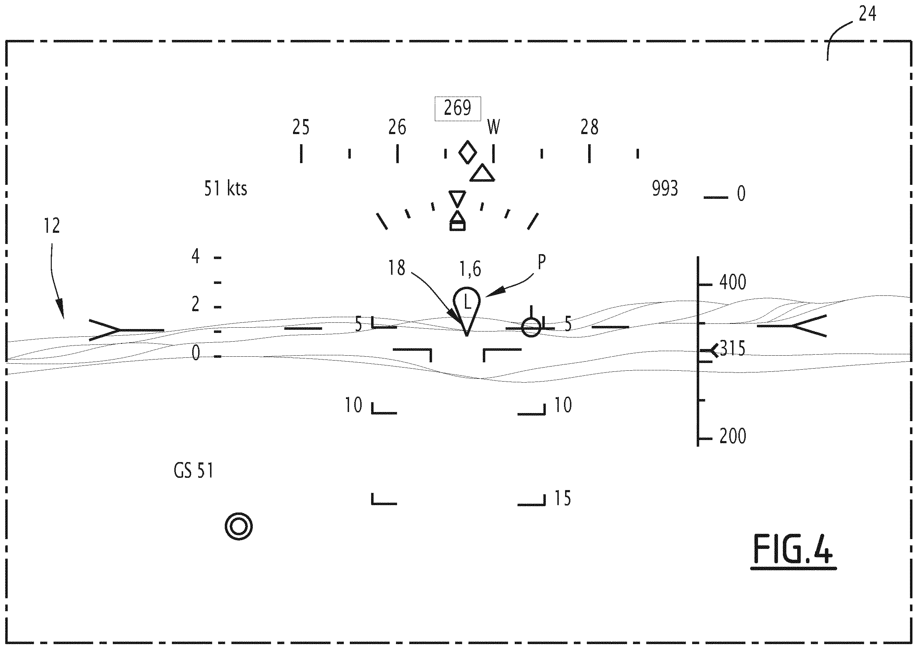

En particulier, comme représenté sur la figure 4, le symbole est un point de repère P lorsque l'aéronef 10 est à une distance D de la zone de poser 18 supérieure à une distance seuil.

En référence à la figure 3, la distance D entre l'aéronef 10 et la zone de poser 18 est par exemple calculée en référence au centre de la zone de poser.

La distance seuil est par exemple égale à 250 m.

Le module d'affichage 32 est avantageusement configuré pour afficher la distance D entre l'aéronef 10 et la zone de poser 10 dans le voisinage du repère P.

Par affiché dans le voisinage, on entend affiché à côté ou au-dessus du repère P.

Le module de recalage 34 est configuré pour acquérir au moins une valeur d'ajustement saisie par le pilote 14. L'acquisition de cette valeur d'ajustement est effectuée par exemple par l'utilisation d'un boîtier de contrôle dédié ou par un déplacement d'un doigt du pilote 14 sur un écran d'affichage tête basse tactile disposé dans le cockpit de l'aéronef 10.

En variante, la valeur d'ajustement est entrée manuellement par le pilote à partir un clavier numérique.

En particulier, le module de recalage 34 est configuré pour acquérir une valeur d'ajustement relative à l'altitude, une valeur d'ajustement relative à la longitude et une valeur d'ajustement relative à la latitude.

A partir de cette valeur d'ajustement, le module d'affichage 32 est en outre configuré pour afficher le symbole à une position par rapport au terrain 12 corrigée à partir de ou des valeurs d'ajustement acquises.

En effet, les coordonnées géographiques de la zone de poser 18 acquises par le module d'acquisition 30 de la zone de poser 18 peuvent présenter un décalage par rapport aux coordonnées réelles, notamment dues aux imprécisions du système de positionnement par satellites.

Le pilote 14 peut ainsi ajuster la position du symbole associé à la zone de poser 18 afin que le symbole que le pilote 14 visualise sur l'écran d'affichage corresponde au terrain 12 réel.

Dans l'exemple de la figure 3, le dispositif électronique 26 comprend une unité de traitement d'informations formée par exemple d'une mémoire et d'un processeur associé à la mémoire. Le module d'acquisition 30, le module d'affichage 32, et en complément facultatif le module de recalage 34, sont réalisés chacun sous forme d'un logiciel, ou d'une brique logicielle, exécutable par le processeur. La mémoire du dispositif électronique 26 est alors apte à stocker un logiciel d'acquisition, un logiciel d'affichage, et en complément facultatif, un logiciel de recalage. Le processeur est alors apte à exécuter chacun de ces logiciels.

En variante non représentée, le module d'acquisition 30, le module d'affichage 32, et en complément facultatif le module de recalage 34, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif électronique d'identification 26 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est, par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

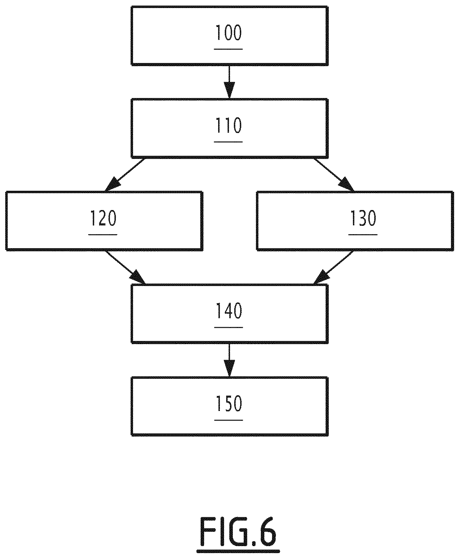

Le fonctionnement du dispositif électronique d'identification 26 selon l'invention va désormais être expliqué à l'aide de la figure 6 représentant un organigramme du procédé, selon l'invention, d'identification d'une zone de poser 18 et d'affichage sur le système d'affichage 24 tête haute embarqué dans un aéronef d'un symbole conforme à la piste d'atterrissage, le procédé étant mis en oeuvre par le dispositif électronique d'affichage 26.

Initialement, l'aéronef 10 survole le terrain 12.

L'aéronef 10 vole vers la zone de poser 18 sur laquelle le pilote 14 souhaite faire atterrir l'aéronef 10.

Puis lors d'une étape initiale 100, comme représenté sur la figure 2, l'aéronef 10 effectue un vol stationnaire au-dessus de la zone de poser 18.

Autrement dit, l'aéronef 10 reste immobile dans le référentiel du terrain 12, à hauteur constante par rapport à la zone de poser 18 pendant une durée au moins égale à trois secondes, avantageusement au moins cinq secondes.

Le vol stationnaire est effectué à une hauteur du terrain supérieure à 15 m telle que le vent provoqué par le flux rotor ne soulève pas de particules posées au sol.

Ainsi, l'aéronef 10 effectue le vol stationnaire hors effet de sol, c'est à dire hors effet de « brown-out » ou « white-out ».

Puis, le procédé comprend une étape 110 d'acquisition de la position géographique de la zone de poser 18.

En particulier, lors du vol stationnaire, le pilote 14 actionne une commande située dans le cockpit de l'aéronef 10. La commande active alors le module d'acquisition 30 du dispositif électronique 26.

En variante, le module d'acquisition 30 s'active automatiquement lorsque le vol stationnaire au-dessus de la zone de poser 18 est détecté.

Comme expliqué ci-dessus, l'étape d'acquisition 110 comprend alors les sous-étapes de :
- acquisition de la latitude et de la longitude de la zone de poser 18 au moyen du système de positionnement par satellites de l'aéronef 10;
- acquisition de la hauteur H relative de l'aéronef 10 au-dessus de la zone de poser 18 au moyen du radio-altimètre de l'aéronef 10;
- acquisition de l'altitude de l'aéronef 10 au moyen du baro-altimètre de l'aéronef 10;
- détermination de l'altitude de la zone de poser 18 par soustraction de ladite hauteur H relative à l'altitude de l'aéronef 10.

Puis, lors d'une étape 120, l'aéronef 10 s'éloigne puis vole en direction de la zone de poser 18.

En particulier, comme représenté sur la figure 3, l'aéronef 10 effectue une passe de reconnaissance (gauche ou droite selon les contraintes de l'environnement) pour se présenter face au vent, avec la zone de poser 18 en visuel pour le pilote et effectuer un nouveau vol stationnaire à distance de la zone de poser 18.

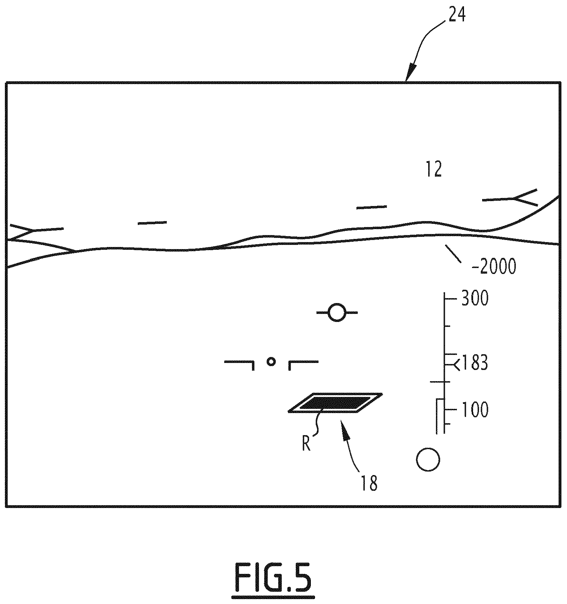

Comme représenté sur les figures 4, 5 et 6, le procédé comprend en parallèle de l'étape 120, une étape 130 d'affichage sur le système d'affichage 24 tête haute du symbole conforme de la zone de poser 18 à la position géographique relevée.

Cet affichage de la zone de poser 18 à la position géographique relevée lors de l'étape 110 est avantageusement effectué lorsque l'aéronef 10 est à une distance de la zone de poser 18 supérieure à une valeur seuil, par exemple égale à 20 m.

Lorsque l'aéronef 10 est à une distance de la zone de poser inférieure à cette valeur seuil, la valeur de la hauteur relevée par le radio-altimètre est considérée directement pour afficher le symbole conforme associé à la zone de poser 18. En effet, à partir de cette distance seuil, le sol peut être considéré comme plat et au même niveau que la zone de poser 18.

Le procédé comprend alors une étape 140 de recalage éventuel de la conformité du symbole par rapport à la zone de poser 18 sur le système d'affichage 24 par le pilote.

Puis, lors d'une étape finale 150, l'aéronef 10 effectue la descente et le poser sur la zone de poser 18 en utilisant le symbole affiché sur le système d'affichage 24 tête haute.

On conçoit alors que la présente invention présente un certain nombre d'avantages.

En effet, l'invention permet d'aider le pilote à atterrir sur une zone de poser 18 notamment en cas de conditions de visibilités dégradées.

Ainsi, l'invention permet un atterrissage plus sûr de l'aéronef dans des conditions de visibilité réduite.

En outre, l'invention est simple à mettre en oeuvre. Le procédé selon l'invention permet notamment de s'affranchir de la connaissance a priori des coordonnées de la zone de poser.

L'invention est également peu onéreuse à mettre en oeuvre puisqu'elle ne nécessite pas d'embarquer de coûteux et encombrants capteurs supplémentaires.

Le procédé selon l'invention permet avantageusement au pilote d'ajuster manuellement la position latérale et verticale du symbole d'aide à l'atterrissage, et ensuite de vérifier le bon positionnement de ce symbole par retour visuel.

## Revendications

1. Procédé d'identification d'une zone de poser (18) et d'affichage sur un système d'affichage (24) tête haute embarqué dans un aéronef (10) d'un symbole (P, R) conforme à ladite zone de poser (18), l'aéronef (10) étant propre à survoler un terrain (12) et à atterrir sur ladite zone de poser (18) du terrain (12), l'aéronef (10) étant un hélicoptère, un drone ou un avion électrique à décollage et atterrissage verticaux ;
le procédé comprenant au moins les étapes suivantes :
- une phase de vol stationnaire (100) de l'aéronef (10) au-dessus de la zone de poser (18) et acquisition (110) de la position géographique de la zone de poser (18) ;
- un vol (120) de l'aéronef (10) en direction de la zone de poser et affichage (130) sur le système d'affichage tête haute d'un symbole conforme de la zone de poser (18) à la position géographique relevée.

2. Procédé d'identification selon la revendication 1, dans lequel la phase de vol stationnaire est effectuée à une hauteur (H) du terrain (12) supérieure à 15 m.

3. Procédé d'identification selon la revendication 1 ou 2, dans lequel l'acquisition de la position géographique de la zone de poser (18) est effectuée par l'actionnement d'une commande lors du vol stationnaire par un opérateur de l'aéronef (10).

4. Procédé d'identification selon l'une quelconque des revendications précédentes, dans lequel l'étape d'acquisition (110) comprend les sous-étapes de :
- acquisition de la latitude et de la longitude de la zone de poser (18) au moyen d'un système de positionnement par satellites embarqué dans l'aéronef (10);
- acquisition de la hauteur (H) relative de l'aéronef (10) au-dessus de la zone de poser (18) au moyen d'un radio-altimètre embarqué dans l'aéronef (10);
- acquisition de l'altitude barométrique de l'aéronef (10) au moyen d'un baro-altimètre embarqué dans l'aéronef (10);
- détermination de l'altitude de la zone de poser (18) par soustraction de ladite hauteur relative à l'altitude barométrique de l'aéronef (10).

5. Procédé d'identification selon l'une quelconque des revendications précédentes, dans lequel le symbole affiché est :
- un point de repère (P) lorsque l'aéronef (10) est à une distance (D) de la zone de poser (18) supérieure à une distance seuil, la distance (D) entre l'aéronef (10) et la zone de poser (18) étant avantageusement affichée dans le voisinage du point de repère (P);
- une représentation (R) en deux dimensions superposée à la zone de poser (18) lorsque l'aéronef (10) est à une distance (D) de la zone de poser (18) inférieure à la distance seuil.

6. Procédé d'identification selon l'une quelconque des revendications précédentes, dans lequel le procédé d'identification comprend une outre une étape de recalage (140) éventuel de la conformité du symbole (P, R) par rapport à la zone de poser (18) sur le système d'affichage (24) par un opérateur de l'aéronef (10).

7. Programme d'ordinateur comportant les instructions logicielles qui, lorsque mises en oeuvre par un équipement informatique, mettent en oeuvre le procédé d'identification selon l'une quelconque des revendications précédentes.

8. Dispositif électronique d'identification d'une zone de poser (18) et d'affichage (26) sur un système d'affichage (24) tête haute embarqué dans un aéronef (10) d'un symbole (P, R) conforme à ladite zone de poser (18), l'aéronef (10) étant propre à survoler un terrain (12) et à atterrir sur ladite zone de poser (18) du terrain (12), l'aéronef (10) étant un hélicoptère, un drone ou un avion électrique à décollage et atterrissage verticaux ,
le dispositif électronique d'affichage (26) comprenant :
- un module d'acquisition (30) configuré pour acquérir la position géographique de la zone de poser (18) lors d'une phase de vol stationnaire de l'aéronef (10) au-dessus de la zone de poser (18) ; et
- un module d'affichage (32) configuré pour afficher sur le système d'affichage (24) tête haute un symbole (P, R) conforme de la zone de poser (18) à la position géographique relevée, lors d'un vol de l'aéronef (10) en direction de la zone de poser (18).
